# EUROPÄISCHE PATENTANMELDUNG

(11) **EP 3 192 350 A1**
(43) Veröffentlichungstag der Anmeldung: **19.07.2017**
(21) Anmeldenummer: 16001412.2
(22) Anmeldetag: 23.06.2016
(51) Int. Cl.: A01G 1/00, A01G 7/02, A01G 7/04, A01G 25/09, E04B 1/343

(54) **VORRICHTUNG UND VERFAHREN ZUR WACHSTUMSBESCHLEUNIGUNG UND REGENERATION VON RASENFLÄCHEN**

(30) Priorität: 14.01.2016 DE 102016000392
(71) Anmelder: Linde Aktiengesellschaft, 80331 München (DE)
(72) Erfinder: Krabbendam, Peter, 2046 AA Haarlem (NL); Noel, Stephen, Bembridge Isle of Wight, PO355XU (GB)
(74) Vertreter: Gellner, Bernd

(57) **Zusammenfassung**

Erfindungsgemäß ist eine Vorrichtung zur Wachstumsbeschleunigung und Regeneration von Rasenflächen vorgesehen. Diese umfasst ein Gehäusebasiselement zum Überspannen einer Rasenfläche und eine daran angeordnete Wachstumseinrichtung. Die Vorrichtung zeichnet sich dadurch aus, dass eine Hebe-/Senkeinrichtung zum Anheben der Vorrichtung von der Rasenfläche und zum Absenken der Vorrichtung auf die Rasenfläche vorgesehen ist.

## Beschreibung

Die Erfindung betrifft eine Vorrichtung und ein Verfahren zur Wachstumsbeschleunigung und Regeneration von Rasenflächen.

Aus der EP 0 561 193 A2 geht ein Verfahren und eine Vorrichtung zur Wachstumsförderung von Pflanzen bzw. Gras hervor. Die Vorrichtung weist eine Abdeckung, die das Gras nahezu vollständig abdeckt, Lichtquellen und zwei Lüfter zum Einbringen von Kohlendioxid auf. Unter dieser geschlossenen Abdeckung wird das Gras innerhalb von 24 Stunden mittels der künstlichen Lichtquellen etwa 8 bis 12 Stunden beleuchtet. Die Atmosphäre, der das Gras ausgesetzt ist, wird dabei durch die zwei Lüfter ständig oder intervallweise bewegt und/oder ständig oder von Zeit zu Zeit ausgetauscht. Die Kohlendioxidmenge, die vom Gras aufgenommen wird, soll kontinuierlich oder in Zeitabschnitten der Atmosphäre des Raumes durch eine Einrichtung zum Einbringen von Kohlendioxid zugeführt werden. Durch dieses Verfahren und diese Vorrichtung soll es möglich sein, Gras zu jeder Jahreszeit entsprechend der natürlichen Voraussetzungen wachsen zu lassen.

In der EP 1 269 815 A ist eine Vorrichtung zur Begasung von Rasenflächen beschrieben. Dabei wird durch einen sich über eine Rasenfläche erstreckenden Gaskanal der Rasenfläche ein Gasstrom zugeführt. Der Gaskanal ist an einem offenen Ende an ein Druckaggregat angeschlossen und am anderen Ende geschlossen. Dieser weist an einem der Rasenfläche zugewandten Bereich Austrittsöffnungen auf. In einer Weiterbildung der Vorrichtung sind Sensoren vorgesehen, die eine oder mehrere Messgrößen, wie Umgebungstemperatur, Umgebungsluftfeuchte, Rasentemperatur, Rasenfeuchte, Gaseintrittstemperatur, Gasaustrittstemperatur, Eintrittsgasfeuchte, Austrittsgasfeuchte, Kohlendioxidanteil sowie Düngeranteil erfassen und zu einem Regel- und Steuergerät übertragen, mit dem das Druckaggregat und/oder die Zuführung von Wasserdampf und/oder Kohlendioxid und/oder Dünger und/oder eine Heizvorrichtung eingestellt werden können. Die Vorrichtung kann auch als mobile Vorrichtung mit einem Fahrgestell ausgebildet sein. Bei einer derartigen mobilen Vorrichtung ist ein Fahrgestell mit einem Antrieb vorgesehen. Der Antrieb erfolgt mittels einer Antriebskette, die in einem Antriebskanal verläuft. Der Antriebskanal befindet sich unter dem Niveau der Rasenfläche.

Die DE 10 2006 017 813 A1 offenbart ein Verfahren zur Wachstumsbeschleunigung und Regeneration von Rasenflächen, wobei die Rasenfläche zumindest teilbereichsweise oberseitig durch einen nach unten offenen allseitig umschlossenen Raum umschlossen wird. In den Raum wird CO2 eingeleitet wird und die vom Raum überdeckte Rasenfläche mit einer Beleuchtungseinrichtung mit Licht beaufschlagt. Auf die DE 10 2006 017 813 A1 wird hiermit vollinhaltlich Bezug genommen.

Nachteilig bei den aus dem Stand der Technik bekannten Vorrichtungen ist, dass lediglich eine begrenzte Fläche abgedeckt wird und eine Vergrößerung der Vorrichtungen überproportional teuer ist. Weiterhin ist das Aufstellen derartiger Vorrichtungen zeit- und arbeitsintensiv. Zudem sind derartige Wachstumsvorrichtungen aufgrund ihres Aufbaus bei Sturm und Unwettern sehr anfällig.

Aufgabe der Erfindung ist es, eine Vorrichtung und ein Verfahren bereitzustellen mit denen große Rasenflächen einfach und kostengünstig im Wachstum beschleunigt werden können.

Diese Aufgabe wird durch die unabhängigen Patentansprüche gelöst. Vorteilhafte Ausgestaltungen sind in den Unteransprüchen angegeben.

Erfindungsgemäß ist eine Vorrichtung zur Wachstumsbeschleunigung und Regeneration von Rasenflächen vorgesehen. Diese umfasst ein Gehäusebasiselement zum Überspannen einer Rasenfläche und eine daran angeordnete Wachstumseinrichtung. Die Vorrichtung zeichnet sich dadurch aus, dass eine Hebe-/Senkeinrichtung zum Anheben der Vorrichtung von der Rasenfläche und zum Absenken der Vorrichtung auf die Rasenfläche vorgesehen ist.

Bei den aus dem Stand der Technik bekannten Vorrichtungen sind meist eine Mehrzahl von Personen und gewisse logistische Anstrengungen notwendig, um die Vorrichtungen auf einer Rasenfläche aufzustellen und um entweder eine Rasenfläche vollständig mit diesen Vorrichtungen abzudecken oder diese manuell oder automatisch zu verfahren, um eine Wachstumsbeschleunigung einer gesamten Rasenfläche zu bewirken.

Durch das automatische Anheben und Absenken der Vorrichtung mittels einer Hebe-/Senkeinrichtung sind weniger manuelle Tätigkeiten bei der Verwendung der Vorrichtung notwendig. Auf diese Weise werden Kosten für Personal reduziert und es genügt, eine oder evtl. gar keine Person, um die Vorrichtung zu bedienen.

Eine Beschädigung durch Unwetter wird durch das Anheben der Vorrichtung in eine Ruheposition vermieden. Auch die Gefahr eines Personenschadens durch herumfliegende bzw. umfallende Vorrichtungen wird reduziert.

Die Vorrichtung kann mittels der Hebe-/Senkeinrichtung in einer Höhe von 0,01 m bis 3 m über der Rasenfläche angeordnet werden. Rasen in Sportstadien hat in etwa eine Höhe von 0,02 m bis 0,03 m. Die Oberkante der Grashalme wird als Referenzfläche für die vorstehenden Höhenangaben verwendet.

Die Wachstumseinrichtung kann eine Beleuchtungseinrichtung zum Beleuchten der Rasenfläche umfassen.

Mittels der Beleuchtungseinrichtung ist es, insbesondere im Winter, möglich, die Rasenfläche mittels Licht zu bestrahlen. Auf diese Weise wird die Photosynthese, dem Stoffwechselprozess, bei dem Pflanzen mit Hilfe von Licht, Wasser, Temperatur und CO2 den Energiespeicher Glucose und Sauerstoff freisetzen, verstärkt und dadurch das Wachstum erhöht.

Weiterhin kann die Wachstumseinrichtung eine CO2-Ausströmeinrichtung zum Beaufschlagen der überspannten Rasenfläche mit CO2 umfassen.

Durch das Vorsehen einer CO2-Ausströmeinrichtung wird das Wachstum des Rasens beschleunigt.

Die CO2-Ausströmeinrichtung kann oberhalb der Beleuchtungseinrichtung angeordnet sein.

Dadurch, dass die CO2-Ausströmeinrichtung oberhalb der Beleuchtungseinrichtung angeordnet ist, verteilt sich das CO2 unterhalb der überspannten Rasenfläche mittels Konvektion.

Die Wachstumseinrichtung kann eine Bewässerungseinrichtung zum Beaufschlagen der überspannten Rasenfläche mit Wasser umfassen.

Auf diese Weise kann dem Rasen gezielt Wasser zum Wachstum zugeführt werden.

Die Wachstumseinrichtung kann eine Heizeinrichtung umfassen.

Durch das Vorsehen einer Heizeinrichtung ist es möglich, die Rasenfläche bzw. das Erdreich auch bei kühleren Temperaturen auf ein Temperaturniveau zu bringen, welches für das Wachstum förderlich ist.

Das Basiselement kann ein etwa rechteckförmiges Plattenelement sein, das sich in einer horizontalen Ebene erstreckt.

Das Basiselement kann eine Breite von 68 m und eine Länge von 5 m aufweisen, wobei sich die Breite auf die Breite eines Spielfeldes und die Länge auf die Längserstreckung bzw. Länge eines Spielfeldes bezieht.

In den Randbereichen des Basiselements können sich in vertikaler Richtung nach unten in Richtung Rasenfläche erstreckende Seitenwandungen angeordnet sein. Diese Seitenwandungen sind derart angeordnet, dass das Basiselement und die Seitenwandungen ein Gehäuse ausbilden, das einen abgeschlossenen Raum über der Rasenfläche begrenzt.

Durch das Vorsehen eines Gehäuses wirken sämtliche Maßnahmen der Wachstumseinrichtung, wie z. B. das Beleuchten, das Bewässern, das Heizen und insbesondere auch das Einbringen von CO2 effizienter auf die Rasenfläche ein.

Das Gehäuse kann vorzugsweise transparent ausgebildet sein. - aber um Leichtverschmutzung zu vermeiden auch undurchsichtig sein.

Die Vorrichtung kann an einer Dachkonstruktion eines Stadions, an einem Mast bzw. Lichtmast oder an einer kranartigen Konstruktion angeordnet sein, wobei die Vorrichtung mittels der Hebe-/Senkeinrichtung in Richtung Rasenfläche absenkbar und von dieser abhebbar ist.

Dadurch, dass die Vorrichtung an einer Dachkonstruktion bzw. an einem über der Rasenfläche erhöhten Punkt angeordnet ist, muss die Vorrichtung nicht von einer oder mehreren Personen auf der Rasenfläche positioniert werden, sondern es ist möglich, dass die Vorrichtung in eine Ruheposition angehoben, in etwa im Bereich der Dachkonstruktion oder im Bereich eines Lichtmasten oder dergleichen verbleibt. Alternativ kann die Vorrichtung auch neben einem Spielfeld abgelegt werde, so dass diese vor Beschädigungen geschützt ist.

Zudem kann die Vorrichtung auch während eines Spiels als Zusatzbeleuchtung verwendet werden.

Soll dann eine Wachstumsbeschleunigung des Rasens durchgeführt werden, muss diese lediglich über den Rasen abgesenkt werden.

Die Hebe-/Senkeinrichtung umfasst zumindest eine und vorzugsweise zwei Winden. Die beiden Winden sind in den seitlichen Randbereichen der kürzeren Kanten der Vorrichtung angeordnet.

Durch das Vorsehen zweier Winden ist es möglich, die Vorrichtung stabil anzuheben und abzusenken.

Weiterhin kann die Vorrichtung eine Verfahreinrichtung zum Verfahren der Vorrichtung in horizontaler Richtung über der Rasenfläche aufweisen.

Mittels der Verfahreinrichtung ist es möglich, die Kosten für Personal erheblich zu reduzieren und mittels einer relativ schmal ausgebildeten Vorrichtung eine komplette Rasenfläche zu behandeln.

Die Verfahreinrichtung kann einen elektrischen Antrieb und Räder umfassen, die entlang von Schienen verfahrbar sind.

Die Schienen können an einer Dachkonstruktion eines Stadions angeordnet sein und erstrecken sich im Wesentlichen parallel zur Längserstreckung eines Spielfeldes.

Die Verfahreinrichtung kann auch eine Art Kranarm einer kranartigen Konstruktion sein, wobei das Verfahren der Vorrichtung dann durch Schwenken des Auslegers erfolgt.

Durch das Vorsehen eines Kranarmes ist es ebenso wie beim Anordnen der Vorrichtung im Bereich einer Dachkonstruktion möglich, diese nach der Benutzung neben dem Spielfeld abzusetzen oder auf einem erhöhten Punkt außerhalb des Spielfelds anzuordnen.

Die CO2-Ausströmeinrichtung kann ein rohrartiges Gebilde (zum Beispiel ein Schlauch) sein, welches sich über Teillänge oder die gesamte Länge des Raumes erstreckt, wobei das Rohr bzw. rohrartige Gebilde Ausströmöffnungen besitzt, aus denen das CO2-Gas ausströmen kann.

Zur Bevorratung von CO2-Gas kann ein Gasspeicher vorhanden sein, der mit einer entsprechenden Zuführleitung mit dem rohrartigen Gebilde verbunden ist, wobei in dem umschlossenen Raum zur Überwachung des CO2-Gehalts ein CO2-Messgerät oder ein CO2-Sensor vorhanden sein kann, welcher über eine Leitung mit dem Gasspeicher verbunden ist.

Weiterhin kann eine Steuereinrichtung vorgesehen sein.

Mittels der Steuereinrichtung kann die Vorrichtung automatisch aus einer Ruheposition in eine Rasenwachstumsposition unmittelbar über eine Rasenfläche abgesenkt werden.

Weiterhin kann mittels der Steuereinrichtung das Verfahren der Vorrichtung mittels der Verfahreinrichtung gesteuert werden, so dass die Vorrichtung selbständig eine komplette Rasenfläche behandeln kann.

Zudem können die Einrichtungen zum Überwachen des CO2-Gehalts mit der Steuereinrichtung zum Steuern/Regeln des Gasgehalts verbunden werden, so dass die Entnahme des Gasgehalts von CO2-Gas aus dem Gasspeicher aus regelnd ausgebildet ist.

Die Beleuchtungseinrichtung kann aus Glühlampen und/oder Gasentladungslampen und/oder Metalldampflampen und/oder Leuchtstoffröhren und/oder insbesondere LEDs bestehen. Mit LEDs ist es möglich eine geringere Bauhöhe (0,3m -0,8 m) zu erreichen wodurch Gewicht eingespart wird. Zudem wird im Vergleich zu Glühlampen erheblich Energie eingespart.

Weiterhin ist erfindungsgemäß ein Spielfeld und insbesondere ein Stadion mit zumindest einer oder zwei und vorzugsweise drei erfindungsgemäßen Vorrichtungen vorgesehen.

Gemäß einem erfindungsgemäßen Verfahren zur Wachstumsbeschleunigung und Regeneration von Rasenflächen, ist vorgesehen die Rasenfläche zumindest teilbereichsweise oberseitig durch ein Gehäusebasiselement der Vorrichtung zu überspannen, wobei die Vorrichtung eine Hebe-/Senkeinrichtung aufweist und die Vorrichtung mittels der Hebe-/Senkeinrichtung in Richtung der Rasenfläche abgesenkt wird und die Rasenfläche anschließend mittels der Wachstumseinrichtung wachstumsbeschleunigt wird.

Die Vorteile des Verfahrens entsprechen im Wesentlichen denen der vorstehend beschriebenen Vorrichtung.

Die Vorrichtung kann vorzugsweise in Längsrichtung oder auch in Breitenrichtung einer Rasenfläche mittels einer Verfahreinrichtung verfahren werden. Grundsätzlich ist ein Verfahren in alle Richtungen in der Horizontalen Ebene oder sogar im Raum möglich.

Die vom Basiselement überspannte Rasenfläche kann mittels einer CO2-Ausströmeinrichrung mit CO2 beaufschlagt werden.

Die von dem Basiselement überspannte Rasenfläche kann mittels einer Bewässerungseinrichtung mit Wasser beaufschlagt werden.

Die vom Basiselement überspannte Rasenfläche kann mittels einer Heizeinrichtung, wie z. B. einem Gebläse oder Heizelementen beheizt werden.

Zumindest die vom Basiselement überspannte Rasenfläche kann mit einer Beleuchtungseinrichtung beleuchtet werden.

Die Wachstumseinrichtung, die Verfahreinrichtung und/oder Hebe-/Senkeinrichtung kann von einer Steuereinrichtung gesteuert werden.

Die Vorrichtung kann nach einem vorbestimmten Zeitintervall von in etwa 3 bzw. 5 bzw. 10 Stunden von einer ersten Position über einer Rasenfläche in eine zweite sich daran anschließende Position über der Rasenfläche mittels der Verfahreinrichtung verfahren werden. Auch ein permanentes Verfahren mittels der Verfahreinrichtung mit geringer Geschwindigkeit ist möglich.

Die Vorrichtung kann in eine Ruheposition verfahren werden, in der sie vor wetterbedingten oder sonstigen Beschädigungen geschützt ist.

Im Folgenden wird die erfindungsgemäße Vorrichtung anhand der Figuren näher erläutert. Diese zeigen in
Fig. 1 ein Stadion mit einer erfindungsgemäßen Vorrichtung zur Regeneration und Wachstumsbeschleunigung von Rasenflächen in einem Ruhezustand in einer perspektivischen Ansicht,
Fig. 2 die erfindungsgemäße Vorrichtung aus Fig. 1 in einer über dem Rasen angeordneten Position, um diesen mit einer Wachstumseinrichtung zu beaufschlagen,
Fig. 3 die Vorrichtung aus den Fig. 1 und 2 in einer bezüglich der Rasenfläche verfahrenen Position, und
Fig. 4 ein weiteres Ausführungsbeispiel der erfindungsgemäßen Vorrichtung in einer schematischen, perspektivischen Darstellung

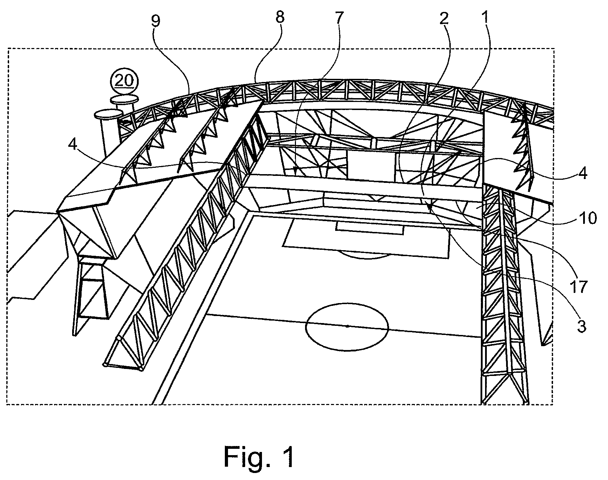

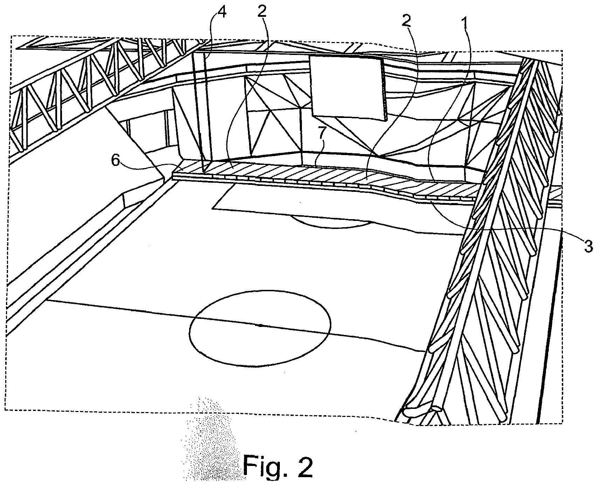

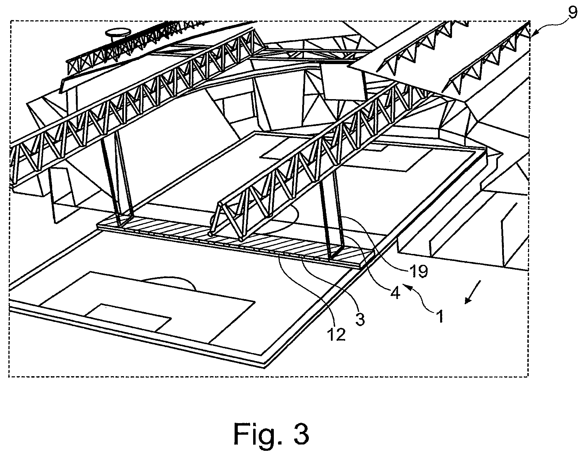

Die erfindungsgemäße Vorrichtung 1 zur Wachstumsbeschleunigung und Regeneration von Rasenflächen 5 umfasst ein Gehäusebasiselement 2 zum Überspannen einer Rasenfläche 5 und eine daran angeordnete Wachstumseinrichtung 3 (Figuren 1 bis 3). Weiterhin ist eine Hebe-/Senkeinrichtung 4 zum Anheben der Vorrichtung 1 von der Rasenfläche 5 und zum Absenken der Vorrichtung 1 von einem gegenüber der Rasenfläche 5 erhöhten Bereich auf die Rasenfläche 5 vorgesehen.

Das Basiselement 2 ist ein in etwa rechteckförmiges Plattenelement, das sich in einer horizontalen Ebene parallel zur Rasenfläche 5 erstreckt.

Die Breite des Basiselements 2, welche sich etwa parallel zu einer Breite eines Spielfelds 5 erstreckt, beträgt in etwa 68m. Die Länge des Basiselements 2, welche sich in etwa parallel zu einer Längserstreckung bzw. einer Seitenlinie eines Spielfeldes erstreckt, beträgt in etwa 5m.

Ein Fußballfeld darf laut deutschen Regularien zwischen 90 m und 120 m lang und zwischen 45 m bis 90 m breit sein. Gemäß FIFA- und UEFA-Standard werden für ein Fußballspielfeld Maße von 105m x 68m (Länge x Breite) empfohlen und in internationalen Wettbewerben teilweise auch vorgeschrieben.

Die Breite des Basiselements 2 beträgt vorzugsweise zwischen 40m bis 75m bzw. zwischen 45m und 70m.

Die Länge der Vorrichtung beträgt zwischen 1 m bis 10m bzw. zwischen 2m bis 8m bzw. zwischen 4m bis 7m und insbesondere 4,5m bis 5,5m.

Demgemäß werden die sich parallel zur Längserstreckung 11 eines Spielfeldes erstreckenden Kanten des Basiselements 2 als Längenränder 6 und die sich parallel zur Breite eines Spielfeldes 5 erstreckenden Kanten des Basiselements 2 als Breitenränder 7 bezeichnet.

In den Randbereichen 6,7 des Basiselements sind sich in vertikaler nach unten in Richtung Rasenfläche erstreckende Seitenwandungen 21 derart angeordnet, dass das Basiselement 2 und die Seitenwandung 21 ein Gehäuse 17 ausbilden, das einen abgeschlossenen Raum über der Rasenfläche begrenzt.

Sowohl das Basiselement 2 als auch die Seitenwandung 21 können aus einem Kunststoff transparent bzw. lichtdurchlässig und starr oder flexibel ausgebildet sein.

Das Gehäuse 17 kann somit starr oder ein Zelt oder zeltartiges Gebilde aus einer im Wesentlichen gasdichten Wandung sein. Die Zeltwandung der Seitenwandung 21 und oder des Basiselements 2 kann eine gasdichte Folie und/oder transparente und/oder eine textile oder synthetische, insbesondere reißfeste Schicht bzw. Folie sein. Weiterhin kann die Zeltwandung isolierend ausgebildet sein, mit einer Schaumstofffolienschicht und/oder zwischen zwei Folien angeordneten Luftkammern.

Alternativ kann das Basiselement 2 auch eine starre Platte sein, wobei die Seitenwandungen 21 entweder flexibel oder ebenfalls starr ausgebildet sind.

Im Bereich der Längsränder 6 ist jeweils eine Winde 19 der Hebe-/Senkeinrichtung 4 zum Anheben der Vorrichtung 1 von der Rasenfläche 5 und zum Absenken der Vorrichtung 1 auf die Rasenfläche 5 vorgesehen.

Die Winden 19 sind entweder auf dem Basiselement 2 oder im Bereich einer Dachkonstruktion 8 eines Stadions 9 oder neben dem Spielfeld auf dem Boden angeordnet.

Mittels dieser Winden 19 bzw. Seilwinden ist die Vorrichtung 1 in einer Ruhestellung, in der die Vorrichtung im Bereich der Dachkonstruktion bzw. in einer Höhe von 10m bis 30m bzw. 15m bis 25m über einer Spielfeldebene anordbar und von dieser in Richtung Rasen bis zu einer Höhe von 0,01 m bis 3m bzw. von 0,05m bis 2m bzw. von 0,1 m bis 1 m, gemessen von der Unterkante des Basiselements 2 bis zu einer Oberkante des Rasens, über die Rasenfläche 5absenkbar.

Weiterhin ist eine Verfahreinrichtung 10 zum Verfahren der Vorrichtung in horizontaler Richtung, insbesondere in Längsrichtung 11 eines Spielfeldes vorgesehen.

Die Verfahreinrichtung 10 umfasst Schienen, die an der Dachkonstruktion 8 eines Stadions 9 angeordnet sind und sich im Wesentlichen parallel zur Längserstreckung 11 eines Spielfeldes 5 erstrecken. Weiterhin umfasst die Verfahreinrichtung 10 einen Motor, bspw. einen elektrischen Antrieb, und Räder, so dass die Vorrichtung 1 entlang der Schienen verfahrbar ist.

Anstelle von Schienen kann auch ein Spindelantrieb oder ein Zahngestänge mit Linearantrieb vorgesehen sein. Die Verfahreinrichtung 10 kann auch eine windenartige Mechanik aufweisen, um die Vorrichtung 1 entlang der Längsrichtung 11 eines Spielfeldes 5 zu verfahren.

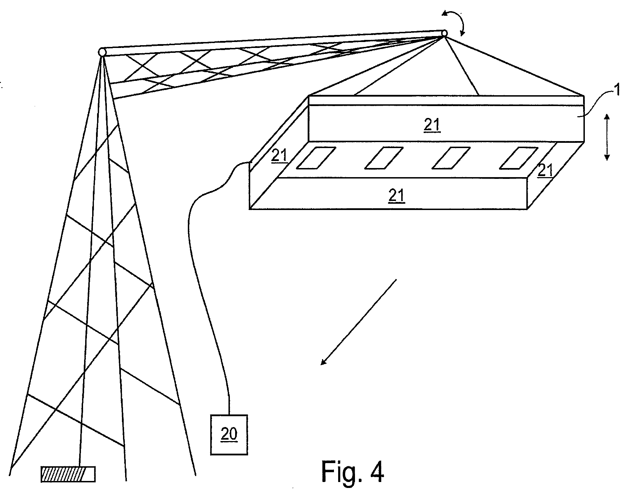

Gemäß einer alternativen Ausführungsform kann die Verfahreinrichtung auch eine kranartige Konstruktion 18 mit einem kranartigen Ausleger sein, der an einem eigenständigen Kranmasten oder an einem bereits im Bereich eines Stadions bzw. eines Spielfeldes angeordneten Lichtmasten oder eines weiteren Bauelements eines Stadions angeordnet ist (Figur 4).

Ein Vorteil der Ausbildung der Verfahreinrichtung in Kombination mit der Hebe-/Senkeinrichtung ist, dass ein derartiger Kran flurfrei arbeitet und mehr als zwei Bewegungsrichtungen (auf/ab-links/rechts entspricht zwei Koordinatenrichtungen) ausführen kann, das bedeutet, die Vorrichtung kann in einem dreidimensionalen Arbeitsbereich verfahren werden, was bedeutet, dass das Gehäusebasiselement an einem anderen Punkt abgesetzt werden kann, als es aufgenommen wurde.

Die Motoren der Winden 19 und der Verfahreinrichtung 10 sind mit einer Steuereinrichtung 20 verbunden.

Oberhalb des Gehäusebasiselements 2 kann eine Windmesseinrichtung (nicht dargestellt) angeordnet sein, die ebenfalls mit der Steuereinrichtung 20 verbunden ist. Die Windmesseinrichtung kann auch eine bereits auf einem Stadiondach oder im Bereich eines Spielfeldes 5 installierte Windmesseinrichtung sein.

Die Steuereinrichtung 20 wertet die von der Windmesseinrichtung bereitgestellten Daten aus.

Die Steuereinrichtung 20 ist derart ausgebildet, dass die Vorrichtung 1 über die Motoren der Hebe-/Senkeinrichtung und/oder der Verfahreinrichtung 10 mit einer bestimmten Geschwindigkeit auf die Rasenfläche 5 abgesenkt und anschließend weiter verfahren wird oder für eine bestimmte Zeit dort verweilt, um die optimale Behandlungsdauer pro Rasenfläche zu gewährleisten. Bei Sturm oder böigem Wind kann die Steuereinrichtung 20 die Vorrichtung 1 anheben und wieder in einer Ruheposition im Bereich unterhalb eines Stadiondaches verfahren, um den Wind weniger Angriffsfläche zu bieten.

Es kann auch vorgesehen sein, dass die Vorrichtung 1 in einen entsprechenden, im Bereich des Stadions 9 angeordneten, Unterstand verfahren wird, wo sie vor Beschädigungen durch den Wind geschützt ist.

In einem oberen Bereich unterhalb des Basiselements 2 ist eine CO2-Ausströmeinrichtung 13 für Gas vorhanden, wobei die Ausströmeinrichtung 13 beispielsweise ein rohartiges Gebilde ist, welches sich über eine Teillänge oder die gesamte Länge und/oder Breite des Gehäusebasiselements erstreckt. Das Rohr bzw. rohrartige Gebilde besitzt Ausströmöffnungen, aus denen das CO2-Gas ausströmen kann. Die CO2-Ausströmeinrichtung ist Bestandteil der Wachstumseinrichtung 3.

Das CO2-Gas stammt aus einem Gasspeicher (nicht dargestellt), der mit einer entsprechenden Zuführleitung mit dem rohrartigen Gebilde verbunden ist.

Um zudem den CO2-Gehalt in dem umschlossenen Raum zu überwachen, ist ein CO2-Messgerät oder ein CO2-Sensor über eine Leitung vorzugsweise mit dem Gasspeicher verbunden, wobei die Steuereinrichtung 20 den Gasgehalt steuert/regelt.

Weiterhin umfasst die Wachstumseinrichtung 3 eine Beleuchtungseinrichtung . Diese ist ebenfalls unterhalb des Basiselements 2 angeordnet und umfasst Leuchtstoffröhren, Glühlampen oder Gasentladungslampen. Bevorzugt werden Photosyntheseiampen verwendet. Als Beleuchtungseinrichtung 12 können auch Leuchtdioden vorgesehen sein, die Licht im für die Photosynthese geeigneten Wellenbereich emittieren.

Weiterhin umfasst die Wachstumseinrichtung 3 eine Heizeinrichtung15 (nicht dargestellt), die entweder als Gebläse oder in Form von Heizelementen ausgebildet ist, um insbesondere in den vom Basiselement 2 überspannten Bereichen die Rasenfläche 5 zu beheizen.

Durch die Heizeinrichtung 15 kommt es innerhalb des überspannten und/oder umschlossenen Raumes zu einer Zirkulation des aus dem rohrartigen Gebilde ausströmenden und nach unten strömenden bzw. fallenden CO2, wobei durch Konvektion bei einem mittigen Eintrag das CO2 vom Basiselement her in den Randbereichen nach oben strömt, falls Seitenwandungen vorgesehen sind.

Die Wärmeentwicklung einer entsprechenden Beleuchtungseinrichtung 12 kann auch für die Ausbildung einer derartigen Konvektion ausreichend sein, so dass auch ohne eine Heizeinrichtung eine ausreichende Konvektion sichergestellt ist.

Beim oben erläuterten Ausführungsbeispiel wird zum Zuführen des CO2-Gases ein Rohr verwendet. Es hat sich jedoch auch gezeigt, dass im Rahmen der Erfindung möglich ist, anstelle eines solchen Rohres eine einzelne punktförmige Düse oder mehrere Düsen zu verwenden, da durch die im umschlossenen Raum bestehende Konvektion für eine gleichmäßige Verteilung des CO2-Gases gesorgt wird.

Die Beleuchtungseinrichtung 12 ist in einer Höhe von 0,1m bis 4m bzw. von 0,2m bis 1 m vorgesehen, wobei die CO2-Leitung vorzugsweise über der Beleuchtungseinrichtung 12 angeordnet ist.

Die Wachstumseinrichtung 3 umfasst zudem eine Bewässerungseinrichtung 14 zum Beaufschlagen der überspannten Rasenfläche mit Wasser.

Die Beleuchtungseinrichtung 12, Bewässerungseinrichtung 14 und die Heizeinrichtung 15 sin ebenfalls mit der Steuereinrichtung 20 verbunden und werde von dieser gesteuert/geregelt.

Das Basiselement 2 kann auch in Form eines Satteldaches ausgebildet sein. Auf diese Weise ist es einfacher möglich, die CO2-Ausströmeinrichtung13 oberhalb der Beleuchtungseinrichtung 12 anzuordnen.

Der überspannte Abschnitt der Rasenfläche 5 kann eine Fläche von 30m2 bis 400m2 umfassen.

Die Steuereinrichtung 20 ist somit mit sämtlichen Komponenten der Vorrichtung 1, wie z.B. der Hebe-/Senkeinrichtung 4, der Verfahreinrichtung 10 und der Wachstumseinrichtung, umfassend die Beleuchtungseinrichtung 12, die Bewässerungseinrichtung 14, die CO2-Ausströmeinrichtung 13 und die Heizeinrichtung 15 verbunden.

Demgemäß kann die Vorrichtung 1 auch einen oder mehrere Sensoren umfassen, die den Feuchtigkeitsgrad der Rasenfläche 5, die Höhe des Rasens, die Außentemperatur sowie die Bodentemperatur, die Windgeschwindigkeit, Helligkeit der Umgebung (Tag oder Nacht) usw. ermitteln, wobei diese Daten von der Steuereinrichtung verarbeitet werden.

Die Vorrichtung 1 kann auch einen Rasenmäher und/oder einer Vertikutierer aufweisen, die automatisch entlang des Basiselements verfahrbar sind.

Im Folgenden wird ein erfindungsgemäßes Verfahren zur Wachstumsbeschleunigung und Regeneration von Rasenflächen mittels der erfindungsgemäßen Vorrichtung beschrieben.

Gemäß diesem Verfahren ist vorgesehen, die Vorrichtung 1 mittels der Verfahreinrichtung aus einer Ruheposition heraus über einen ersten Rasenabschnitt eines Spielfeldes 5 zu verfahren.

In einem nächsten Schritt wird die Vorrichtung mittels der Hebe-/Senkeinrichtung in Richtung Rasenfläche derart abgesenkt, dass das Gehäusebasiselement 2 in etwa 0,01 m über der Rasenfläche angeordnet ist.

In einem nächsten Schritt erfolgt ein Bewässern der Rasenfläche mittels der Bewässerungseinrichtung und/oder ein Beaufschlagen der Rasenfläche mit CO2 mittels der CO2-Ausströmeinrichtung und/oder ein Beleuchten der Rasenfläche mittels der Beleuchtungseinrichtung 12 und/oder ein Beheizen der Rasenfläche mittels der Heizeinrichtung.

Nach Ablauf eines vorbestimmten Zeitintervalls von in etwa 5 Stunden wird die Vorrichtung mittels der Verfahreinrichtung von dem ersten Abschnitt der Rasenfläche in

Längsrichtung in Richtung eines zweiten sich unmittelbar daran anschließenden Abschnitt verfahren und die vorstehenden Schritte werden wiederholt.

Dieser Vorgang wird vorzugsweise von zwei erfindungsgemäßen Vorrichtungen parallel ausgeführt, so dass von jeder der Vorrichtungen ein halbes Spielfeld beaufschlagt wird.

Nach Beendigung des Wachstumsbeschleunigungsvorganges wird die Vorrichtung mittels der Hebe-/Senkeinrichtung angehoben und anschließend mittels der Verfahreinrichtung in die Ruheposition zurückverfahren.

Erfindungsgemäß sind somit vorzugsweise zwei Vorrichtungen vorgesehen, um ein Spielfeld zu beaufschlagen, die mit einer Dachkonstruktion eines Stadiondaches über die Hebe-/Senkeinrichtung und/oder die Verfahreinrichtung gekoppelt sind.

Demgemäß ist erfindungsgemäß auch ein Stadion mit zumindest einer erfindungsgemäßen Vorrichtung zur Wachstumsbeschleunigung vorgesehen.

Im Folgenden werden weitere Alternativen und Ausgestaltungen der erfindungsgemäßen Vorrichtung beschrieben.

In einer Höhe h vom Rasen 5 gemessen kann unterhalb des Basiselements eine Beleuchtungseinrichtung 12 in Form von beispielsweise sechs bis 32 Lampen vorhanden sein. Die Lampen sind speziell für die Photosynthese entwickelte Assimilations-LED Lampen mit beispielsweise 600W und einem Beleuchtungsgrad von 100 bis 200 µmol/m2s.

Die Lampen sind in einer Höhe h von 0,05 m bis 2,0 m und vorzugsweise 0,5 m bis 1 m über der Rasenfläche angeordnet.

Die Lampen erhöhen die Umgebungstemperatur um ca. 10°C. Dies genügt oftmals, um auch im Winter eine Temperatur von 3°C bis 5°C zu erreichen, die der Rasen zum Wachstum benötigt.

Bei hohen Außentemperaturen kann es zweckmäßig sein, die Lampen räumlich vom begasten Raum zu trennen, da diese die meiste Hitze erzeugen. Zu hohe Temperaturen wären schädlich für das Wachstum des Rasens. Deshalb weist die erfindungsgemäße Vorrichtung 1 gemäß einer weiteren Ausführungsform einen Beleuchtungsraum, in dem die Beleuchtungseinrichtungen angeordnet sind, und einen Regenerationsraum, in dem CO2-Ausströmeinrichtung angeordnet ist, auf. Der Beleuchtungsraum und der Regenerationsraum sind voneinander durch eine horizontale Deckenwandung getrennt, die transparent bzw. lichtdurchlässig ausgebildet ist. Die zweite Deckenwandung schließt den Regenerationsraum gasdicht ab und ist z.B. ca. 50 cm über dem Boden angeordnet.

Die Lampen sind in dem Beleuchtungsraum unterhalb des Firstes des satteldachartig ausgebildeten Basiselements angeordnet. Die Seitenwandungen sind mit Belüftungsmitteln, die als Belüftungsöffnungen ausgebildet sind versehen, um die Wärme der Lampen abzuführen.

Wenn die gesamte Folie als transparente Folie ausgebildet ist, gelangt Sonnenlicht auf den Rasen, so dass die Beleuchtungseinrichtungen bei Tageslicht ausgeschaltet werden kann, wodurch erheblich Energie eingespart wird. Die Folie ist vorzugsweise derart ausgebildet, dass sie von außen lichtdurchlässig ist und von innen Licht reflektiert, indem z.B. die Innenfläche verspiegelt ist und die Außenfläche matt ausgebildet ist.

Durch die räumliche Trennung und/oder die geöffneten Belüftungsöffnungen wird eine zusätzliche Erwärmung des Regenerationsraums verhindert.

Die Vorrichtung kann auch ohne Unterteilung des umschlossenen Raums in einen Beleuchtungsraum und einen Regenerationsraum unterteilt ausgebildet sein.

Die CO2-Konzentration beträgt vorzugsweise zwischen 600 ppm CO2 und 5000 ppm CO2.

Durch die gasdichte Abkapselung mittels eines umschlossenen Raumes oder Zeltes wird durch die Wärmeentwicklung der Leuchtmittel gegebenenfalls auch die Wärmeentwicklung durch eine Rasenheizung eine signifikante Temperaturerhöhung herbeigeführt, welche ausreicht, die den Rasen ausbildenden Graspflanzen ein Wachstum zu ermöglichen.

Durch die Wärmeentwicklung der Leuchtmittel zum Einen und gegebenenfalls einer Rasenheizung zum Anderen wird eine gleichmäßige -Konzentration durch konvektive Verteilung erzielt.

Mit dem Verfahren und der Vorrichtung wird selbst in kalten Wintermonaten und bei hoher Belastung der Rasenfläche in einfacher Weise durch eine höhere Lichtintensität als bei Tageslicht und eine hohe CO2-Konzentration bei ausreichenden hohen Temperaturen optimale Bedingungen für den Rasen erzielt.

Die Erfinder konnten selbst in den Wintermonaten ein Wachstum von etwa 0,5 mm pro Stunde der den Rasen ausbildenden Graspflanzen beobachten. Die Außentemperaturen betrugen hierbei etwa 5°C bis 6°C. Die im Rasen gemessenen Temperaturen waren deutlich höher. Dies lag zum einem daran, dass eine Bodenheizung verwendet wurde. Jedoch hat auch der Wärmeeintrag durch die Lampen und die wärmerückhaltende Wirkung durch das Zelt und die CO2-Konzentration zur Temperaturerhöhung im Rasen beigetragen. So wurde eine Temperatur von 21°C im Rasen erzielt.

Die erfindungsgemäßen überspannten und/oder umbauten Räume haben etwa eine Grundfläche von 7m x 75 m bzw. von. 5 x 68 m.

Weiterhin eignet sich die Vorrichtung um lokal sehr beanspruchte Bereiche, wie z.B. den Bereich um das Tor zu pflegen.

Es ist vorgesehen, dass das System bzw. die Vorrichtung oder das Verfahren an einem bestimmten Ort vier bis 24 Stunden verbleibt und betrieben wird und dann umgesetzt wird, um an einem nächsten Ort weiterbetrieben zu werden. Alternativ ist auch ein permanentes Verfahren der Vorrichtung mit langsamer Geschwindigkeit möglich..

Bei dem erfindungsgemäßen Verfahren und bei der erfindungsgemäßen Vorrichtung ist von Vorteil, dass sehr einfach, effektiv und kostengünstig große Rasenflächen behandelt werden können.

### Bezugszeichenliste

- 1: Vorrichtung
- 2: Basiselement
- 3: Wachstumseinrichtung
- 4: Hebe-/Senkeinrichtung
- 5: Spielfeld
- 6: Längsrand
- 7: Breitenrand
- 8: Dachkonstruktion
- 9: Stadion
- 10: Verfahreinrichtung
- 11: Längserstreckung
- 12: Beleuchtungseinrichtung
- 13: CO2-Ausströmeinrichtung
- 14: Bewässerungseinrichtung
- 15: Heizeinrichtung
- 16: Seitenwandungen
- 17: Gehäuse
- 18: kranartigen Konstruktion
- 19: Winde
- 20: Steuereinrichtung
- 21: Seitenwandung

## Patentansprüche

1. Vorrichtung zur Wachstumsbeschleunigung und Regeneration von Rasenflächen umfassend ein Gehäusebasiselement zum Überspannen einer Rasenfläche, und eine daran angeordnete Wachstumseinrichtung,
**dadurch gekennzeichnet,**
**dass** eine Hebe-/Senkeinrichtung zum Anheben von der Rasenfläche und Absenken der gesamten Vorrichtung auf die Rasenfläche vorgesehen ist.

2. Vorrichtung gemäß Anspruch 1, **dadurch gekennzeichnet,**
**dass** die Vorrichtung mittels der Hebe-/Senkeinrichtung in einer Höhe von 0,01 m bis 3 m über der Rasenfläche anordbar ist.

3. Vorrichtung gemäß Anspruch 1 oder 2, **dadurch gekennzeichnet,**
**dass** die Wachstumseinrichtung eine Beleuchtungseinrichtung zum Beleuchten der Rasenfläche umfasst.

4. Vorrichtung gemäß einem der Ansprüche 1 bis 3, **dadurch gekennzeichnet,**
**dass** die Wachstumseinrichtung eine CO2-Ausströmeinrichtung zum Beaufschlagen der überspannten Rasenfläche mit CO₂ umfasst.

5. Vorrichtung gemäß einem der Ansprüche 1 bis 4, **dadurch gekennzeichnet,**
**dass** die Wachstumseinrichtung eine Bewässerungseinrichtung zum Beaufschlagen der überspannten Rasenfläche mit Wasser umfasst.

6. Vorrichtung nach einem der Ansprüche 1 bis 5, **dadurch gekennzeichnet,**
**dass** das Basiselement ein in etwa rechteckförmiges Plattenelement ist, das sich in einer horizontalen Ebene erstreckt.

7. Vorrichtung nach einem der Ansprüche 1 bis 6, **dadurch gekennzeichnet,**
**dass** in den Randbereichen des Basiselements sich in vertikaler Richtung nach unten in Richtung Rasenfläche erstreckende Seitenwandungen derart angeordnet sind, dass das Basiselement und die Seitenwandungen ein Gehäuse ausbilden, das einen abgeschlossenen Raum über der Rasenfläche begrenzt.

8. Vorrichtung nach einem der Ansprüche 1 bis 7, **dadurch gekennzeichnet,**
**dass** die Vorrichtung an einer Dachkonstruktion eines Stadions, an einem Mast oder an einer kranartigen Konstruktion angeordnet ist und die Vorrichtung mittels der Hebe-/Senkeinrichtung in Richtung Rasenfläche absenkbar und von dieser abhebbar ist.

9. Vorrichtung nach einem der Ansprüche 1 bis 8, **dadurch gekennzeichnet,**
**dass** eine Verfahreinrichtung zum Verfahren der Vorrichtung über die Rasenfläche vorgesehen ist und dass die Verfahreinrichtung einen elektrischen Antrieb und Räder umfasst, die entlang von Schienen verfahrbar sind.

10. Vorrichtung gemäß Anspruch 9, **dadurch gekennzeichnet,**
**dass** die Schienen an einer Dachkonstruktion eines Stadions angeordnet sind und sich im Wesentlichen parallel zur Längserstreckung eines Spielfeldes erstrecken.

11. Vorrichtung gemäß einem der vorhergehenden Ansprüche, **dadurch gekennzeichnet,**
**dass** eine als kranartiger Ausleger ausgeführte Verfahreinrichtung zum verfahren der Vorrichtung über die Rasenfläche vorgesehen ist und das Verfahren durch Schwenken des Auslegers erfolgt.

12. Verfahren zur Wachstumsbeschleunigung und Regeneration von Rasenflächen, wobei die Rasenfläche zumindest teilbereichsweise oberseitig durch ein Gehäusebasiselement der Vorrichtung (1) überspannt wird, wobei die Vorrichtung eine Hebe-/Senkeinrichtung aufweist und die Vorrichtung (1) mittels der Hebe-/Senkeinrichtung in Richtung der Rasenfläche abgesenkt wird und die Rasenfläche anschließend mittels der Wachstumseinrichtung wachstumsbeschleunigt wird.

13. Verfahren gemäß Anspruch 12, **dadurch gekennzeichnet,**
**dass** die vom Basiselement überspannte Rasenfläche mittels einer CO₂-Ausströmeinrichrung mit CO2 beaufschlagt wird.

14. Verfahren nach einem der Ansprüche 12 oder 13, **dadurch gekennzeichnet,**
**dass** die Vorrichtung nach einem vorbestimmten Zeitintervall von in etwa 5 Stunden von einer ersten Position über einer Rasenfläche in eine zweite sich daran anschließende Position über der Rasenfläche mittels der Verfahreinrichtung verfahren wird.

15. Stadion mit einer Rasenfläche, **dadurch gekennzeichnet,**
**dass** das Stadion zumindest eine Vorrichtung gemäß einem der Ansprüche 1 bis 11 aufweist.
